(19) Europäisches Patentamt
European Patent Office
Office européen des brevets

(11) **EP 4 530 596 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **24201237.5**

(22) Anmeldetag: **19.09.2024**

(51) Internationale Patentklassifikation (IPC):
**G01M 13/023** $^{(2019.01)}$ **F16H 57/01** $^{(2012.01)}$

(52) Gemeinsame Patentklassifikation (CPC):
**G01M 13/023; F16H 57/01**

(54) **VERFAHREN UND VORRICHTUNG ZUR ÜBERWACHUNG EINES RIEMENTRIEBS**

METHOD AND APPARATUS FOR MONITORING A BELT DRIVE

PROCÉDÉ ET DISPOSITIF DE SURVEILLANCE D'UN ENTRAÎNEMENT À COURROIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.09.2023 DE 102023209656**

(43) Veröffentlichungstag der Anmeldung:
**02.04.2025 Patentblatt 2025/14**

(73) Patentinhaber: **ContiTech Deutschland GmbH 30175 Hannover (DE)**

(72) Erfinder:
• **Birkner, Nico**
**30175 Hannover (DE)**
• **Konya, Alexander**
**30175 Hannover (DE)**

(74) Vertreter: **Preusser, Andrea**
**ContiTech Deutschland GmbH**
**Intellectual Property**
**Philipsbornstraße 1**
**30165 Hannover (DE)**

(56) Entgegenhaltungen:
WO-A1-2021/200285 DE-A1- 102019 206 169
US-A1- 2021 010 899

**Beschreibung**

Die Erfindung betrifft ein Verfahren und eine Vorrichtung zur Überwachung eines Riementriebs mit mindestens einer durch einen Antriebsmotor angetriebenen Antriebsscheibe und mindestens einer Abtriebsscheibe und mindestens einem Antriebsriemen, vorzugsweise einem Zahnriemen, wobei der Antriebsriemen die Antriebsscheibe und Abtriebsscheibe umlaufend über jeweils einen Teilumfang umschlingt, wobei der Antriebsriemen mindestens eine erste Markierung aufweist und mindestens einem dem Antriebsriemen zugeordneten ersten Sensorelement, wobei während des Riemenumlaufs die Passage der ersten Markierung durch das erste Sensorelement detektiert wird.

Riementriebe zur Übertragung von Drehmomenten und Drehbewegungen sind auf vielen technischen Gebieten bekannt und gelten als leicht bauende, geräuscharme und hohe Drehmomente übertragende Antriebssysteme. Dabei umschlingt der Antriebsriemen über einen Teilumfang bzw. über einen Umschlingungswinkel jeweils eine Antriebsscheibe oder -rolle und mindestens eine Abtriebsscheibe oder -rolle und überträgt dort die Kräfte durch Reibung und/oder durch Formschluss. Dies kann der Übertragung einer fortlaufenden Bewegung dienen, um z.B. die Rotation der Antriebseinheit mit einem Verbrennungsmotor, mit einem Hybridmotor oder mit einem Elektromotor eines Fahrzeugs auf die Räder des Fahrzeugs zu übertragen. Es können jedoch auch Änderungen der Stellung der Abtriebseinheit auf diese Art und Weise vorgenommen werden, um z.B. eine Lenkbewegung eines Lenkrads eines elektromechanischen Lenksystems eines Fahrzeugs auf dessen Räder zu übertragen.

Als Antriebsriemen sind verschiedene Ausführungsformen von Zahnriemen, Flachriemen, Keilriemen oder Keilrippenriemen bekannt.

Eine während der Betriebszeit erforderliche Zustandsüberwachung an Antriebsriemen ist in der Regel nur durch visuelle Inspektion und mechanische Prüfungen realisierbar. Bei gekapselten Riementrieben, d.h. bei Riementrieben, die in einem Staub und wasserdichten Gehäuse eingeschlossen sind, ist eine permanente visuelle Inspektion aus konstruktionsbedingten Gründen nicht oder nur unter großem Aufwand möglich.

Gekapselte Riementriebe findet man insbesondere bei Lenkungsgetrieben für Fahrzeuge, da diese Getriebe in einem Bereich angeordnet sind, welcher starken Verschmutzungen ausgesetzt ist. So sind Lenkungsriemengetriebe bisher oft auf eine Lebensdauer ausgelegt, was eine zwischenzeitliche Inspektion nicht unbedingt erforderlich macht. Durch eine solche Auslegungsmaxime gerät die Konstruktion jedoch schnell in eine Überdimensionierung aller Bauteile, was wiederum das Gewicht damit den Energieverbrauch erhöhen kann.

Bei Zahnriementrieben ist die Detektion der Vorspannungsverluste ein wesentliches Beurteilungskriterium für den Zustand des Riemens. Durch Setzungserscheinungen bzw. eine Längung des Zahnriemens während der Betriebsdauer kann sich die statische Vorspannkraft des Riemens verringern. Zusätzlich können dynamische Lasteinwirkungen zu einer zeitweisen Verringerung der Vorspannkraft in dem Leertrum, d.h. dem Riemenabschnitt, der nicht zur Leistungsübertragung beiträgt, führen. Mit sinkender Vorspannkraft des Leertrums vergrößert sich der Einlaufwinkel des Leertrums auf die Riemenscheibe. Mit anderen Worten verringert sich der Umschlingungswinkel des Riemens an der Riemenscheibe, wodurch weniger Zähne des Riemens mit der Riemenscheibe im Eingriff stehen und die spezifische Belastung je Riemenzahn steigt. Wenn die Vorspannkraft im Leertrum des Riemens ein kritisches Minimum erreicht, kann dies dazu führen, dass die im Eingriff mit der Riemenscheibe verbleibenden Zähne des Zahnriemens der Belastung nicht mehr standhalten und sich infolgedessen verformen oder sogar abscheren. Der Zahnriemen kann hierbei in der Riemenscheibe überspringen. Der Zahnübersprung deutet auf einen späteren Ausfall des Riementriebs hin, weshalb die frühzeitige Detektion für die Funktionssicherheit unbedingt relevant ist. Bei einem solchen Zahnübersprung dreht die Antriebsriemenscheibe bei Überlastung unterhalb des Riemens durch, der Zahn des Riemens kann auf der Riemenscheibe mehrfach überspringen, sodass der Zahnbereich des Riemens verschleißt.

Für autonom fahrende Fahrzeuge ist der Zahnriemen in einem Lenksystem ein sicherheitsrelevantes Bauteil, weshalb es von besonderer Bedeutung ist, einen bevorstehenden Ausfall des Riemens rechtzeitig zu erkennen.

Die EP 0 382 115 A2 betrifft eine Überwachungseinrichtung für einen Bandantrieb zur frühzeitigen Erfassung einer Materialermüdung eines Antriebsriemens. Der Antriebsriemen weist in seiner Längsrichtung zueinander gleich beabstandete Markierungen auf, wobei die Markierungen von zwei einander beabstandeten Abtasteinrichtungen abtastbar sind. Die Abtastsignale werden in einer an die Abtasteinrichtungen angeschlossnen Signalauswerteeinrichtung in Abhängigkeit vom Abstand der beiden Abtasteinrichtungen voneinander und der Laufgeschwindigkeit des Antriebsriemens in zeitlichen Bezug zueinander gesetzt.

Die US 9 228 909 B1 offenbart ein System zur Kraftmessung in einem Riementrieb. Der Riemen weist einander beabstandete Markierungen auf, deren Abstand sich in Folge einer sich ändernden Kraft verändert. Durch Detektion der Laufzeit zweier Markierungselemente kann eine Korrelation zu der Kraft im Riementrieb bzw. zu dem durch den Riemen übertragenen Drehmoment hergestellt werden.

Die Überwachung einer relativen Positionsveränderung des Riemens in Folge eines Zahnübersprungs zu einer historischen Referenzposition wird durch den zuvor beschriebenen Stand der Technik nicht ermöglicht.

Die DE 20 2016 008 121 U1 offenbart einen Riemenantrieb, bestehend aus Riemenscheibe, Riemen und Überwachungseinrichtung. An dem Riemen und an der Riemenscheibe ist jeweils eine Markierung angebracht. Es wird ein Signal ausgelöst, wenn die Markierungen des Riemens und der Antriebsscheibe sich gegenüberstehen. Die Markierungen zur Identifikation der Position können auf verschiedenen Sensortechnologien, z.B. optischen, induktiven, kapazitiven oder magnetischen Effekten beruhen.

Mithilfe der dort beschriebenen Überwachung können unter anderem bei Zahn- oder Synchronriemen Übersprünge erfasst werden, die einen sofortigen Wartungseingriff erforderlich machen. Ebenso kann Schlupf erkannt werden. Auch lassen sich mit der dort beschriebenen Einrichtung unter Berücksichtigung weiterer Riemenparameter exakte Aussagen über Belastungen machen, denen der Riemen über einen jeweils zurückliegenden Zeitraum ausgesetzt war.

Auch die zu derselben Patentfamilie gehörige WO 2016 177883 A1 offenbart einen solchen Riemenantrieb, bei dem komplementären Markierungen an Riemen und Scheibe zur Überwachung vorgesehen sind. Hier ist auch das entsprechende Verfahren zur Überwachung beansprucht.

Allerdings weisen die hier beschriebenen Systeme und Verfahren den Nachteil auf, dass eine genaue Positionierung des Riemens in Bezug auf die Scheiben erfolgen muss, dass insbesondere nach Reparaturen, etwa nach dem Anbringen von Ersatzscheiben oder Ersatzriemen schwierig ist.

Die DE 10 2019 206 169 A1 offenbart ein Verfahren zur Überwachung eines Riementriebs, wobei der Riemen und der Rotor des Antriebsmotors eine Markierung aufweisen, die über ein Sensorelement überwacht werden kann. Durch einen Abgleich einer zeitlichen und örtlichen Korrelation der Sensorsignale des Riemens und des Rotors gegenüber einem im Neuzustand bestimmten Referenzwert kann Rückschluss auf einen Zahnübersprung des Riemens in der Riemenscheibe gezogen werden.

Nachteiliger Weise kann durch das Verfahren der DE 10 2019 206 169 A1 nur ein bereits erfolgter Zahnübersprung erkannt werden. Ein rechtzeitiger Hinweis auf Unregelmäßigkeiten, wie z. B. einen Vorspannungskraftverlust im Riementrieb, um ein Überspringen der Zähne vorbeugend verhindern zu können, ist hingegen nicht möglich.

Die US 2021/0010899 A1 offenbart einen Riementrieb, wobei zur Überwachung des Betriebszustands ist eine Detektionseinheit vorgesehen ist, die eine Verschiebung des Riemens in einer Richtung senkrecht zur Riemenoberfläche erkennt. Diese Verschiebung tritt insbesondere dann auf, wenn die Vorspannung des Riemens abnimmt. Die erfassten Daten werden an eine Auswerteeinheit weitergeleitet, die anhand eines Vergleichs mit einem Schwellenwert erkennt, ob eine relevante Verschiebung vorliegt. Eine Steuereinheit kann diese Informationen auf einem Display anzeigen und gegebenenfalls eine Anpassung der Riemenspannung veranlassen.

Für die Erfindung liegt die Aufgabe in der Bereitstellung eines Verfahrens zur Überwachung eines Riementriebs und einer dazu ausgebildeten Vorrichtung, wobei eine Veränderung der Vorspannungskraft bereits frühzeitig detektierbar ist. Zusätzlich oder alternativ liegt die Aufgabe in der Bereitstellung einer Lösung zur Detektion eines Zahnübersprungs eines Zahnriemens an einer Riemenscheibe, wobei die Anzahl der zur Detektion des Zahnübersprungs erforderlichen Sensoren verringert werden kann.

Die Lösung dieser Aufgabe ergibt sich durch ein Verfahren zur Überwachung eines Riementriebs mit den Merkmalen des unabhängigen Anspruchs 1.

Eine weitere Lösung der Aufgabe ergibt sich durch eine Vorrichtung zur Überwachung eines Riementriebs mit den Merkmalen des unabhängigen Anspruchs 8, sowie durch einen Riementrieb nach Anspruch 15.

Weitere vorteilhafte Ausbildungen sind den abhängigen Ansprüchen, der allgemeinen Beschreibung sowie den Ausführungsbeispielen zu entnehmen.

Die vorliegende Erfindung betrifft ein Verfahren zur Überwachung eines Riementriebs mit mindestens einer durch einen Antriebsmotor angetriebenen Antriebsscheibe und mindestens einer Abtriebsscheibe und mindestens einem Antriebsriemen. Vorzugsweise ist der Antriebsriemen als ein Zahnriemen ausgebildet. Der Antriebsriemen weist ein polymeres Grundmaterial auf, wobei der Antriebsriemen die Antriebsscheibe und Abtriebsscheibe umlaufend über jeweils einen Teilumfang umschlingt, wobei der Antriebsriemen mindestens eine erste Markierung aufweist. Dem Antriebsriemen ist ein erstes Sensorelement zugeordnet, wobei während des Riemenumlaufs die Passage der ersten Markierung durch das erste Sensorelement detektiert wird.

Das Verfahren ist gekennzeichnet durch die folgenden Verfahrensschritte:

a) Erfassen eines ersten Signals durch das erste Sensorelement, wobei das erste Signal von der Detektion der ersten Markierung abhängig ist, b) Übertragung des ersten Signals an eine Recheneinheit,

c) Ausgabe eines Warn- oder Alarmsignals und bzw. oder Inkrementelles Zählen eines Ereignisses bei Unterschreiten eines festgelegten Toleranzwertes durch die Recheneinheit. Die erste Markierung weist einen sich in Längsrichtung des Antriebsriemens erstreckenden ersten Markierungsabschnitt und einen sich quer zur Längsrichtung erstreckenden zweiten Markierungsabschnitt auf, wobei der erste Markierungsabschnitt und der zweite Markierungsabschnitt sich einander kreuzen, wobei die Recheneinheit gemäß einem weiteren Verfahrensschritt g) zu einem Zeitpunkt der maximalen Intensität des ersten Signals die Lage der ersten Markierung zu dem ersten Sensorelement bestimmt und hieraus einen Einlaufwinkel eines Riementrums, vorzugsweise des Leertrums, bestimmt.

Vorzugsweise ist in der Recheneinheit ein Referenzwert für den Abstand zwischen dem ersten Sensorelement und dem Antriebsriemen im Ursprungszustand hinterlegt. Über eine Kalibrierkurve, in der eine Zuordnung des Pegels des ersten Signals zu einer absoluten Abstandsveränderung zwischen dem ersten Sensorelement und dem Antriebsriemen beschrieben ist, kann durch die Recheneinheit der Abstand zwischen dem ersten Sensorelement und dem Antriebsriemen bestimmt werden.

Das erste Sensorelement ist mit anderen Worten dazu ausgebildet, einen sich verändernden Luftspalt zwischen dem ersten Sensorelement und einer Oberfläche des Antriebsriemens zu detektieren. Das erste Sensorelement kann beispielsweise als optischer, kapazitiver, induktiver oder als ein Magnetfeld-Sensor ausgebildet sein. Das erste Sensorelement kann vorzugsweise in einem Bereich angeordnet sein, in dem der Antriebsriemen auf die Antriebsscheibe aufläuft oder abläuft.

Bei Unterschreiten eines festgelegten Toleranzwertes kann ein Warn- oder Alarmsignal ausgegeben werden. Hierdurch kann auf einen kritischen Vorspannungskraftverlust hingewiesen werden, sodass rechtzeitig ein Austausch oder ein Nachspannen des Riemens erfolgen kann.

Zusätzlich oder alternativ kann ein Ereignis inkrementell gezählt werden. Das Ereignis kann einen Zahnübersprung repräsentieren, wobei sich der Antriebsriemen kurzzeitig aus einer der Riemenscheiben, vorzugsweise der Antriebsriemenscheibe heraushebt und in die nächste Zahnlücke überspringt. Zur Detektion dieses Ereignisses kann ein weiterer Toleranzwert festgelegt werden. Da für einen Zahnriemen nur eine bestimmte Anzahl an Zahnübersprüngen zulässig ist, kann durch das Zählen der Zahnübersprünge die verbleibende Lebensdauer bzw. die verbleibende Anzahl zulässiger Zahnübersprünge bis zum Austausch des Zahnriemens vorhergesagt werden.

Die Markierung kann als schmaler, mit ferromagnetischen oder elektrisch leitfähigen Partikeln versehener Streifen auf dem Antriebsriemen, vorzugsweise auf dem Riemenrücken ausgebildet sein. Vorzugsweise ist die Markierung ein quer zur Längsrichtung des Antriebsriemens ausgebildeter Streifen, der ein deutliches und lokal eng begrenztes Signal beim Passieren des ersten und bzw. oder zweiten Sensorelements ausbildet. Die ferromagnetischen oder elektrisch leitfähigen Partikel können in Form eines Mischungszusatzes im polymeren Grundmaterial des Antriebsriemens vorliegen.

Gemäß einem weiteren Aspekt der vorliegenden Erfindung bestimmt die Recheneinheit aus einer Veränderung des Abstands zwischen dem ersten Sensorelement und dem Antriebsriemen eine Veränderung der Vorspannkraft eines Riementrums, vorzugsweise des Leertrums.

Mit anderen Worten kann über die Abstandsveränderung Rückschluss auf eine absolute Veränderung der Vorspannkraft eines Riementrums gezogen werden. Hierfür kann in der Recheneinheit eine weitere Kalibrierkurve hinterlegt sein, die basierend auf einem Referenzwert der Vorspannkraft im statischen Zustand eine Zuordnung der Abstandsveränderung zwischen dem ersten Sensorelement und dem Antriebsriemen zu einer Veränderung der Vorspannkraft ermöglicht.

Gemäß Verfahrensschritt c) kann das Warn- oder Alarmsignals nach Unterschreiten einer festgelegten kritischen Vorspannungskraft ausgegeben werden.

In einer weiteren vorteilhaften Ausbildung weist das Verfahren die folgenden weiteren Verfahrensschritte auf:

d) Erfassen eines dem Riemen zugeordneten zweiten Signals durch ein zweites Sensorelement, wobei während des Riemenumlaufs die Passage der ersten Markierung durch das zweite Sensorelement detektiert wird, wobei das zweite Signal von der Detektion der ersten Markierung abhängig ist,

e) Übertragen des zweiten Signals an die Recheneinheit,

f) Ausgabe eines Warn- oder Alarmsignals und bzw. oder Inkrementelles Zählen eines Ereignisses bei Unterschreiten eines festgelegten Toleranzwertes durch die Recheneinheit. Die Recheneinheit bestimmt gemäß einem weiteren Verfahrensschritt

g) zu einem Zeitpunkt der maximalen Intensität des zweiten Signals die Lage der ersten Markierung zu dem zweiten Sensorelement und bestimmt hieraus einen Einlaufwinkel eines Riementrums, vorzugsweise des Leertrums.

Die Verfahrensschritte d), e) und f) mit Bezug auf das zweite Sensorelement entsprechen den Verfahrensschritten a), b) und c). Das zweite Sensorelement kann identisch mit dem ersten Sensorelement ausgebildet sein und in einem dem ersten Sensorelement gegenüberliegendem Bereich angeordnet sein, in dem der Antriebsriemen auf die Antriebsscheibe aufläuft oder abläuft. Auf vorteilhafte Weise kann durch das zweite Sensorelement jedes Riementrum einzeln und unabhängig voneinander überwacht werden, sodass eine Überwachung des Riementriebs in beide Drehrichtungen ermöglicht werden kann.

Das erste Sensorelement und bzw. oder das zweite Sensorelement weisen hierzu eine Mehrzahl von in unterschiedlichen Raumrichtungen orientierten Sensoren auf. Mit anderen Worten wird durch die sich kreuzende Anordnung der Markierungsabschnitte in Längs- und Querrichtung neben der Abstandsbestimmung zwischen Sensorelement und Antriebsriemen auch eine Bestimmung des Einlaufwinkels des Leertrums des Antriebsriemens auf die Riemenscheibe ermöglicht. Hierdurch kann auf vorteilhafte Weise die Genauigkeit der Bestimmung des Vorspannungskraftverlustes gesteigert werden. Durch die Bestimmung des Einlaufwinkels kann auf vorteilhafte Weise vermieden werden, dass verschleißbedingte Einflüsse der Markierungen, die zu einer Veränderung der Intensität der Sensorsignale bei gleichem Abstand zwischen Riemen und Sensorelement führen, zu fehlerhaften Messergebnissen führen.

In einer weiteren vorteilhaften Ausbildung weist das Verfahren die folgenden weiteren Verfahrensschritte auf:

> h) Ermittlung der Umfangsgeschwindigkeit der Antriebsscheibe aus einem Drehzahlsignal des Antriebsmotors oder der Antriebsscheibe und einem Durchmesser der Antriebsscheibe durch die Recheneinheit,
> i) Bestimmung eines Zeitintervalls zwischen einem ersten Zeitpunkt der Erfassung des ersten Sensorsignals und einem zweiten Zeitpunkt der Erfassung des zweiten Sensorsignals durch die Recheneinheit,
> j) Ermittlung der Geschwindigkeit des Antriebsriemens aus dem zurückgelegten Weg des Antriebsriemens über eine in der Recheneinheit hinterlegte Abschnittslänge des Antriebsriemens zwischen dem Sensorelement und dem zweiten Sensorelement während des Zeitintervalls durch die Recheneinheit,
> k) Vergleich der Geschwindigkeit des Antriebsriemens mit der Umfangsgeschwindigkeit der Antriebsscheibe,
> l) Ausgabe eines Warn- oder Alarmsignals bei Abweichung von einem Toleranzbereich zwischen der Umfangsgeschwindigkeit der Antriebsscheibe und der Geschwindigkeit des Antriebsriemens durch die Recheneinheit.

Die Geschwindigkeit der Antriebsscheibe wird gemäß Verfahrensschritt h) wie folgt ermittelt:

$$v(Scheibe) = \pi \, x \, d \, x \, n$$

Die Geschwindigkeit des Antriebsriemens wird gemäß Verfahrensschritt j) wie folgt ermittelt:

$$v(Riemen) = \frac{l}{T2 - T1}$$

Mit anderen Worten werden die Geschwindigkeiten der Antriebsscheibe und des Antriebsriemens unabhängig voneinander bestimmt und miteinander ins Verhältnis gesetzt. Bei einem Zahnriemen sind aufgrund der formschlüssigen Verbindung zwischen Riemen und Riemenscheibe die Geschwindigkeiten identisch. Bei einer Abweichung der Geschwindigkeiten des Riemens und der Riemenscheibe zueinander von einem in der Recheneinheit hinterlegten Toleranzbereich wird gemäß Verfahrensschritt l) auf einen Zahnübersprung des Antriebsriemens hingewiesen.

Die Erfindung betrifft ebenfalls die Verwendung des erfindungsgemäßen Verfahrens zur Überwachung eines Riementriebs mit wenigstens einem Antriebsriemen. Vorzugsweise ist der Antriebsriemen als ein Zahnriemen ausgebildet. Vorzugsweise ist der Riementrieb Teil eines Getriebes in einer elektromechanischen Servolenkung eines Kraftfahrzeugs. Insbesondere sogenannte steer-by-wire Systeme, bei denen es keine mechanische Verbindung zwischen dem Lenkrad und dem Lenkgetriebe gibt, müssen besonders hohe Sicherheitsanforderungen erfüllen, weshalb die Verwendung eines Riementriebs mit der erfindungsgemäßen Überwachungsvorrichtung hierfür besonders vorteilhaft ist. Steer-by-wire Systeme finden bevorzugt Anwendung in autonom fahrenden Fahrzeugen.

Grundsätzlich kann der erfindungsgemäße Riementrieb in verschiedensten Anwendungen gebrauch finden, beispielsweise in Bremssystemen mit einer elektromechanischen Bremskraftverstärkung oder in Fahrwerkssystemen mit einer aktiven elektromechanischen Verstellvorrichtung.

Die vorliegende Erfindung betrifft ebenfalls eine Vorrichtung zur Überwachung eines Riementriebs mit mindestens einer durch einen elektrischen Antriebsmotor angetriebenen Antriebsscheibe und einer Abtriebsscheibe und mindestens einem Antriebsriemen, vorzugsweise einem Zahnriemen mit einem polymeren Grundmaterial, wobei der Antriebsriemen die Antriebsscheibe und die Abtriebsscheibe umlaufend über jeweils einen Teilumfang umschlingt. Dem Antriebsriemen ist mindestens ein erstes Sensorelement zugeordnet, wobei das erste Sensorelement zur Erfassung eines ersten Signals ausgebildet ist. Die Recheneinheit ist ausgebildet, nach Unterschreiten eines festgelegten Toleranzwertes ein Warn- oder Alarmsignal auszugeben und bzw. oder ein Ereignis inkrementell zu zählen. Der Antriebsriemen weist mindestens eine erste Markierung auf, wobei während des Riemenumlaufs die Passage der ersten Markierung durch das erste Sensorelement detektierbar ist, wobei das erste Signal von der Detektion der ersten Markierung abhängig ist, wobei die erste Markierung einen sich in Längsrichtung des Antriebsriemens erstreckenden ersten Markierungsabschnitt und einen sich quer zur Längsrichtung erstreckenden zweiten Markierungsabschnitt aufweist, wobei der erste Markierungsabschnitt und der zweite Markierungsabschnitt sich einander kreuzen, wobei das erste Sensorelement eine Mehrzahl von in unterschiedlichen Raumrichtungen orientierten Sensoren aufweist, wobei die Recheneinheit ausgebildet ist, zu einem Zeitpunkt der maximalen Intensität des ersten Signals die Lage der ersten Markierung zu dem ersten Sensorelement zu bestimmen und hieraus einen Einlaufwinkel eines Riementrums, vorzugsweise des Leertrums zu bestimmen.

Vorzugsweise ist das erste Signal an die Recheneinheit zur Ermittlung des Abstands zwischen dem ersten Sensorelement und dem Antriebsriemen weiterleitbar. Der Antriebsriemen dient als Leistungsübertragungselement zwischen einem Motor und einer oder mehrerer Abtriebswellen. Der Riementrieb kann hierbei auch reversierend, d.h. in beide Drehrichtungen betrieben werden.

Vorzugsweise ist in der Recheneinheit ein Referenzwert für den Abstand zwischen dem ersten Sensorelement und dem Antriebsriemen im Ursprungszustand hinterlegt. Über eine Kalibrierkurve, in der eine Zuordnung des Pegels des ersten Signals zu einer absoluten Abstandsveränderung zwischen dem ersten Sensorelement und dem Antriebsriemen beschrieben ist, kann durch die Recheneinheit der Abstand zwischen dem ersten Sensorelement und dem Antriebsriemen bestimmt werden.

Das erste Sensorelement ist mit anderen Worten dazu ausgebildet, einen sich verändernden Luftspalt zwischen dem ersten Sensorelement und einer Oberfläche des Antriebsriemens zu detektieren. Das erste Sensorelement kann beispielsweise als optischer, kapazitiver, induktiver oder als ein Magnetfeld-Sensor ausgebildet sein. Das erste Sensorelement kann vorzugsweise in einem Bereich angeordnet sein, in dem der Antriebsriemen auf die Antriebsscheibe aufläuft oder von der Antriebsscheib abläuft.

Bei Unterschreiten eines festgelegten Toleranzwertes kann ein Warn- oder Alarmsignal ausgegeben werden. Hierdurch kann auf einen kritischen Vorspannungskraftverlust hingewiesen werden, sodass rechtzeitig ein Austausch oder ein Nachspannen des Riemens erfolgen kann.

Zusätzlich oder alternativ kann ein Ereignis inkrementell gezählt werden. Das Ereignis kann einen Zahnübersprung repräsentieren, wobei sich der Antriebsriemen kurzzeitig aus einer der Riemenscheiben, vorzugsweise der Antriebsriemenscheibe heraushebt und in die nächste Zahnlücke überspringt. Zur Detektion dieses Ereignisses kann ein weiterer Toleranzwert festgelegt werden. Da für einen Zahnriemen nur eine bestimmte Anzahl an Zahnübersprüngen zulässig ist, kann durch das Zählen der Zahnübersprünge die verbleibende Lebensdauer bzw. die verbleibende Anzahl zulässiger Zahnübersprünge bis zum Austausch des Zahnriemens vorhergesagt werden.

Die Markierung kann als schmaler, mit ferromagnetischen oder elektrisch leitfähigen Partikeln versehener Streifen auf dem Antriebsriemen, vorzugsweise auf dem Riemenrücken ausgebildet sein. Vorzugsweise ist die Markierung ein quer zur Längsrichtung des Antriebsriemens ausgebildeter Streifen, der ein deutliches und lokal eng begrenztes Signal beim Passieren des Sensorelements ausbildet. Die ferromagnetischen oder elektrisch leitfähigen Partikel können in Form eines Mischungszusatzes im polymeren Grundmaterial des Antriebsriemens vorliegen. Gemäß einem weiteren Aspekt der vorliegenden Erfindung ist die Recheneinheit ausgebildet, aus einer Veränderung des Abstands zwischen dem ersten Sensorelement und dem Antriebsriemen eine Veränderung der Vorspannkraft eines Riementrums, vorzugsweise des Leertrums, zu bestimmen.

Mit anderen Worten kann über die Abstandsveränderung Rückschluss auf eine absolute Veränderung der Vorspannkraft eines Riementrums gezogen werden.

Hierfür kann in der Recheneinheit eine weitere Kalibrierkurve hinterlegt sein, die basierend auf einem Referenzwert der Vorspannkraft im statischen Zustand eine Zuordnung der Abstandsveränderung zwischen dem ersten Sensorelement und dem Antriebsriemen zu einer Veränderung der Vorspannkraft ermöglicht.

Das Warn- oder Alarmsignal kann nach Unterschreiten einer festgelegten kritischen Vorspannungskraft ausgegeben werden.

Gemäß einem weiteren Aspekt der vorliegenden Erfindung weist der Riementrieb ein dem Antriebsriemen zugeordnetes zweites Sensorelement auf, wobei während des Riemenumlaufs die Passage der ersten Markierung durch das zweite Sensorelement detektierbar ist, wobei das zweite Sensorelement zur Erfassung eines zweiten Signals ausgebildet ist, wobei das zweite Signal von der Detektion der ersten Markierung abhängig ist. Das zweite Signal ist an die Recheneinheit zur Ermittlung eines Abstands zwischen dem zweiten Sensorelement und dem Antriebsriemen weiterleitbar, wobei die Recheneinheit ausgebildet ist, nach Unterschreiten eines festgelegten Toleranzwertes ein Warn- oder Alarmsignal auszugeben und bzw. oder ein Ereignis inkrementell zu zählen, wobei das zweite Sensorelement eine Mehrzahl von in unterschiedlichen Raumrichtungen orientierten Sensoren aufweist, wobei die Recheneinheit ausgebildet ist, zu einem Zeitpunkt der maximalen Intensität des zweiten Signals die Lage der ersten Markierung zu dem zweiten Sensorelement zu bestimmen und hieraus einen Einlaufwinkel eines Riementrums, vorzugsweise des Leertrums zu bestimmen.

Das zweite Sensorelement kann identisch mit dem ersten Sensorelement ausgebildet sein und in einem dem ersten Sensorelement gegenüberliegendem Bereich angeordnet sein, in dem der Antriebsriemen auf die Antriebsscheibe aufläuft oder von der Antriebsscheibe abläuft. Auf vorteilhafte Weise kann durch das zweite Sensorelement jedes Riementrum einzeln und unabhängig voneinander überwacht werden, sodass eine Überwachung des Riementriebs in beide Drehrichtungen ermöglicht werden kann.

Mit anderen Worten kann durch die sich kreuzende Anordnung der Markierungen in Längs- und Querrichtung neben der Abstandsbestimmung zwischen

Sensorelement und Antriebsriemen auch eine Bestimmung des Einlaufwinkels des Leertrums des Antriebsriemens auf die Riemenscheibe ermöglicht werden. Hierdurch kann auf vorteilhafte Weise die Genauigkeit der Bestimmung des Vorspannungskraftverlustes gesteigert werden. Durch die Bestimmung des Einlaufwinkels kann auf vorteilhafte Weise vermieden werden, dass verschleißbedingte Einflüsse der Markierungen, die zu einer Veränderung der Intensität der Sensorsignale bei gleichem Abstand zwischen Riemen und Sensorelement führen, zu fehlerhaften Messergebnissen führen.

Die erste Markierung kann ferromagnetische oder elektrisch leitfähige Partikel aufweisen. Vorzugsweise können dem polymeren Grundmaterial des Antriebsriemens die ferromagnetischen oder elektrisch leitfähigen Partikel beigemischt sein. Alternativ kann der Antriebsriemen vorzugsweise auf der Rückenseite, d.h. der Seite des Antriebsriemens, die der kraftübertragenden und vorzugsweise die Zähne des Zahnriemens aufweisenden Seite gegenüberliegt, einen streifen aus polymerem Material mit den ferromagnetischen oder elektrisch leitfähigen Partikeln aufweisen.

Gemäß einem weiteren Aspekt der vorliegenden Erfindung ist die Recheneinheit ausgebildet, aus einem Drehzahlsignal des Antriebsmotors oder der Antriebsscheibe und einem Durchmesser der Antriebsscheibe die Umfangsgeschwindigkeit der Antriebsscheibe zu ermitteln. Die Recheneinheit ist ausgebildet, ein Zeitintervall zwischen einem ersten Zeitpunkt der Erfassung des ersten Sensorsignals und einem zweiten Zeitpunkt der Erfassung des zweiten Sensorsignals zu bestimmen, wobei die Recheneinheit ausgebildet ist, die Geschwindigkeit des Antriebsriemens aus dem zurückgelegten Weg des Antriebsriemens über die Abschnittslänge zwischen dem Sensorelement und dem zweiten Sensorelement während des Zeitintervalls zu ermitteln und mit der Umfangsgeschwindigkeit der Antriebsscheibe zu vergleichen. Die Recheneinheit ist ausgebildet, bei Abweichung von einem Toleranzbereich zwischen der Umfangsgeschwindigkeit der Antriebsscheibe und der Geschwindigkeit des Antriebsriemens ein Warn- oder Alarmsignal auszugeben.

Mit anderen Worten werden die Geschwindigkeiten der Antriebsscheibe und des Antriebsriemens unabhängig voneinander bestimmt und miteinander ins Verhältnis gesetzt. Bei einem Zahnriemen sind aufgrund der formschlüssigen Verbindung zwischen Riemen und Riemenscheibe die Geschwindigkeiten grundsätzlich identisch. Bei einer Abweichung der Geschwindigkeiten des Riemens und der Riemenscheibe zueinander außerhalb eines in der Recheneinheit hinterlegten Toleranzbereichs kann durch die Recheneinheit auf einen Zahnübersprung des Antriebsriemens hingewiesen werden.

Die vorliegende Erfindung betrifft auch einen Riementrieb mit einer erfindungsgemäßen Vorrichtung zur Überwachung eines Riementriebs. Die zuvor genannten Eigenschaften und Vorteile können auf einen beliebigen Riementrieb übertragen werden.

Anhand der Figuren werden im Folgenden unterschiedliche Ausführungsbeispiele der Erfindung schematisch dargestellt und näher erläutert.

Fig. 1 zeigt eine schematische Darstellung des erfindungsgemäßen Riementriebs gemäß eines ersten Ausführungsbeispiels in der Seitenansicht.
Fig. 2a zeigt eine schematische Darstellung des erfindungsgemäßen Riementriebs gemäß eines zweiten Ausführungsbeispiels in der Draufsicht.
Fig. 2b zeigt eine schematische Darstellung des erfindungsgemäßen Riementriebs gemäß eines dritten Ausführungsbeispiels in der Draufsicht.

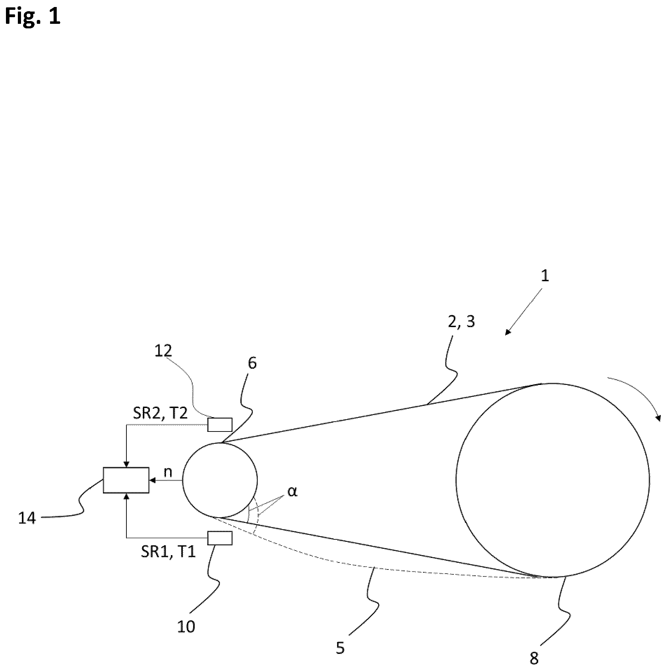

Der in der Figur 1 dargestellte Riementrieb 1 weist einen als Zahnriemen 2 ausgebildeten Antriebsriemen 2 auf. Der Zahnriemen 2 umschlingt eine Antriebsscheibe 6 und eine Abtriebsscheibe 8. Die Antriebsscheibe 6 und die Abtriebsscheibe 8 weisen auf ihrem Außenumfang eine Verzahnung auf, die mit der Verzahnung des Zahnriemens 2 in dem Bereich der Umschlingung des Zahnriemens 2 formschlüssig im Eingriff steht. Die Antriebsscheibe 6 und die Abtriebsscheibe 8 weisen unterschiedliche Durchmesser auf, sodass der Riementrieb 1 als ein Übersetzungsgetriebe ausgebildet ist. Zwischen der Antriebsscheibe 6 und der Abtriebsscheibe 8 sind die Riementrume des Zahnriemens 2 angeordnet. Im statischen Zustand, d. h. ohne Leistungsübertragung des Riemens, ist die Vorspannkraft in beiden Riementrumen gleich groß. Wird durch den Zahnriemen 2 eine Leistung zwischen der motorisch angetriebenen Antriebsscheibe 6 und der Abtriebsscheibe 8 übertragen, so nimmt die Zugkraft im Lasttrum 3 zu, während die Kraft im Leertrum 5 sinkt. Der dynamische Anwendungsfall ist anhand der gestrichelten Linie im Leertrum 5 dargestellt. Durch das Nachlassen der Kraft im Leertrum 5 hängt der Zahnriemen 2 im Bereich des Leertrums 5 durch, sodass sich der Einlaufwinkel $\alpha$ des Leertrums 5 auf die Antriebsscheibe 6 vergrößert. Bei größer werdendem Einlaufwinkel $\alpha$ verringert sich die Anzahl der mit der Antriebsscheibe 6 im Eingriff Zähne des Zahnriemens 2. Hierdurch steigt die spezifische Belastung der sich im Eingriff mit der Antriebsscheibe 6 befindlichen Riemenzähne, wodurch sich die Zähne des Zahnriemens 2 bei Überschreiten einer Grenzlast verformen und in der Antriebsscheibe 6 überspringen. Das Lasttrum 3 und das Leertrum 5 sind in dem dargestellten Riementrieb 1 entsprechend der Drehrichtung in Pfeilrichtung angeordnet. Im Reversierbetrieb, also bei anderer Drehrichtung, würden Lasttrum 3 und Leertrum 5 wechseln.

Der dargestellte Riementrieb 1 weist eine Vorrichtung zur Überwachung auf, wobei dem Zahnriemen 2 ein erstes Sensorelement 10 zur Erfassung eines ersten Signals SR1 und ein zweites Sensorelement 12 zur Erfassung eines zweiten Signals SR2 zugeordnet sind. Das erste Sensorelement 10 und das zweite Sensorelement 12 sind zu dem Zahnriemen 2 beabstandet und berührungsfrei angeordnet. Das erste Sensorelement 10 ist in dem Bereich des Einlaufs des Leertrums 5 auf die Antriebsscheibe 6 angeordnet. Das zweite Sensorelement 12 ist dem ersten Sensorelement 10 gegenüberliegend in dem Bereich des Auslaufs des Lasttrums 2 von der Antriebsscheibe 6 angeordnet. Das erste Signal SR1 und bzw. oder das zweite Signal SR2 werden an eine Recheneinheit 14 zur Auswertung der Signale weitergeleitet.

In der Recheneinheit 14 ist ein Referenzwert für den Abstand zwischen dem ersten Sensorelement 10 und dem Zahnriemen 2 und dem zweiten Sensorelement 12 und dem Zahnriemen 2 im statischen Ursprungszustand hinterlegt. Über eine Kalibrierkurve, in der eine Zuordnung des Pegels des ersten Signals SR1 und des zweiten Signals SR2 zu einer absoluten Abstandsveränderung zwischen dem ersten Sensorelement 10 und dem Zahnriemen 2 und dem zweiten Sensorelement 12 und dem Zahnriemen 2 beschrieben ist, kann durch die Recheneinheit 14 der Abstand zwischen dem ersten Sensorelement 10 und dem Zahnriemen 2 und dem zweiten Sensorelement 12 und dem Zahnriemen 2 bestimmt werden.

Das erste Sensorelement 10 und das zweite Sensorelement 12 sind dazu ausgebildet, einen sich verändernden Luftspalt zwischen dem ersten Sensorelement 10 und einer Oberfläche des Zahnriemens 2 und dem zweiten Sensorelement 12 und der Oberfläche des Zahnriemens 2 zu detektieren. Das erste Sensorelement 10 und das zweite Sensorelement 12 sind als Magnetfeld-Sensoren ausgebildet.

Bei Unterschreiten eines festgelegten Abstands zwischen dem ersten Sensorelement 10 und dem Zahnriemen 2 und bzw. oder dem zweiten Sensorelement 12 wird durch die Recheneinheit 14 ein Warn- oder Alarmsignal ausgegeben. Es wird so auf einen kritischen Vorspannungskraftverlust hingewiesen, sodass rechtzeitig ein Austausch oder ein Nachspannen des Riemens erfolgen kann. Aus einer Veränderung des Abstands zwischen dem ersten Sensorelement 10 und dem Zahnriemen 2 kann die Recheneinheit 14 eine Veränderung der Vorspannkraft des Leertrums 5 bestimmen. Hierzu ist in der Recheneinheit 14 eine weitere Kalibrierkurve hinterlegt, die basierend auf einem Referenzwert der Vorspannkraft im statischen Zustand eine Zuordnung der Abstandsveränderung zwischen dem ersten Sensorelement 10 und dem Zahnriemen 2 zu einer Veränderung der Vorspannkraft ermöglicht. Das Warn- oder Alarmsignals wird nach Unterschreiten einer festgelegten kritischen Vorspannungskraft ausgegeben.

Zusätzlich zählt die Recheneinheit 14 bei Unterschreiten eines ggfs. weiteren festgelegten Abstands zwischen dem zweiten Sensorelement 12 und dem Zahnriemen 2 ein Ereignis inkrementell. Das Ereignis repräsentiert einen Zahnübersprung, wobei sich der Zahnriemen 2 kurzzeitig aus der Antriebsscheibe 6 heraushebt und in die nächste Zahnlücke überspringt. Da für den Zahnriemen 2 nur eine bestimmte Anzahl an Zahnübersprüngen zulässig ist, kann durch das Zählen der Zahnübersprünge die verbleibende Lebensdauer bzw. die verbleibende Anzahl zulässiger Zahnübersprünge bis zum Austausch des Zahnriemens 2 vorhergesagt werden.

Zusätzlich kann die Recheneinheit 14 aus einem Drehzahlsignal n eines Antriebsmotors 4 oder der Antriebsscheibe 6 und einem Durchmesser der Antriebsscheibe 6 die Umfangsgeschwindigkeit der Antriebsscheibe 6 ermitteln. Die Recheneinheit 14 bestimmt ein Zeitintervall zwischen einem ersten Zeitpunkt T1 der Erfassung des ersten Sensorsignals SR1 und einem zweiten Zeitpunkt T2 der Erfassung des zweiten Sensorsignals SR2, wobei die Recheneinheit 14 die Geschwindigkeit des Zahnriemens 2 aus dem zurückgelegten Weg des Zahnriemens 2 über die Abschnittslänge zwischen dem ersten Sensorelement 10 und dem zweiten Sensorelement 12 während des Zeitintervalls ermittelt und mit der Umfangsgeschwindigkeit der Antriebsscheibe 6 vergleicht. Bei einer Abweichung der Geschwindigkeiten des Zahnriemens 2 und der Antriebsscheibe 6 zueinander außerhalb eines in der Recheneinheit 14 hinterlegten Toleranzbereichs wird durch die Recheneinheit 14 auf einen Zahnübersprung des Zahnriemens 2 hingewiesen.

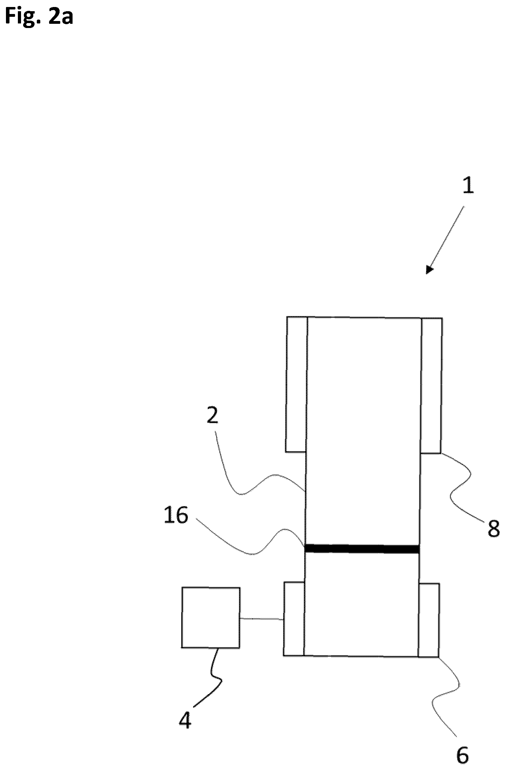

Fig. 2a zeigt eine schematische Darstellung des erfindungsgemäßen Riementriebs 1 aus Figur 1 gemäß eines zweiten Ausführungsbeispiels in der Draufsicht. Die Antriebsscheibe 6 wird durch den Antriebsmotor 4 angetrieben. Der Zahnriemen 2 weist eine erste Markierung 16 auf, wobei bei Umlauf des Zahnriemens 2 die erste Markierung 16 nacheinander durch das erste Sensorelement 10 und das zweite Sensorelement 12 detektiert wird, wobei das erste Signal SR1 und das zweite Signal SR2 von der Detektion der ersten Markierung 16 abhängig ist. Die erste Markierung 16 ist als schmaler, mit ferromagnetischen Partikeln versehener Streifen auf dem Riemenrücken des Zahnriemens 2 angeordnet. Die erste Markierung 16 verläuft quer zur Längsrichtung des Zahnriemens 2. Die ferromagnetischen Partikel liegen in Form eines Mischungszusatzes im polymeren Grundmaterial des Zahnriemens 2 vor.

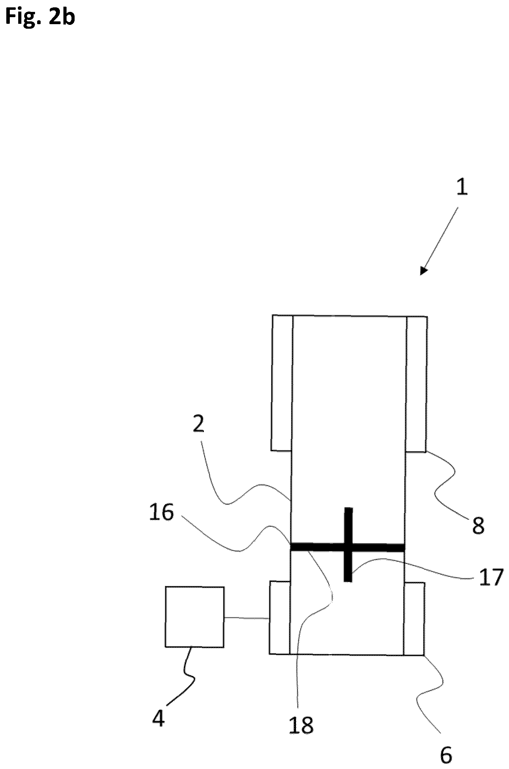

Fig. 2b zeigt eine schematische Darstellung des erfindungsgemäßen Riementriebs 1 gemäß eines dritten Ausführungsbeispiels in der Draufsicht. Im Unterschied zu der Darstellung der Fig. 2a weist die erste Markierung 16 einen sich in Längsrichtung des Zahnriemens 2 erstreckenden ersten Markierungsabschnitt 17 und einen sich quer zur Längsrichtung erstreckenden zweiten Markierungsabschnitt 18 auf, wobei der erste Markierungsabschnitt 17 und der zweite Markierungsabschnitt 18 sich einander kreuzen. Die Recheneinheit 14 kann über ein derartig ausgebildete erste Markierung 16 zu einem Zeitpunkt der maximalen Intensität des ersten Signals SR1 die Lage der ersten Markierung 16 zu dem ersten Sensorelement 10 bestimmen und hieraus einen Einlaufwinkel $\alpha$ des Leertrums 5 auf die Antriebsscheibe 6 bestimmen.

**Bezugszeichenliste (Teil der Beschreibung)**

| | |
|---|---|
| 1 | Riementrieb |
| 2 | Antriebsriemen, Zahnriemen |
| 3 | Lasttrum |
| 4 | Antriebsmotor |
| 5 | Leertrum |
| 6 | Antriebsscheibe |
| 8 | Abtriebsscheibe |
| 10 | erstes Sensorelement |
| 12 | zweites Sensorelement |
| 14 | Recheneinheit |
| 16 | erste Markierung |

17 erster Markierungsabschnitt
18 zweiter Markierungsabschnitt

$\alpha$ Einlaufwinkel
n Drehzahlsignal
T1 erster Zeitpunkt
T2 zweiter Zeitpunkt
SR1 erstes Signal
SR2 zweites Signal

**Patentansprüche**

1. Verfahren zur Überwachung eines Riementriebs (1) mit mindestens einer durch einen Antriebsmotor (4) angetriebenen Antriebsscheibe (6) und mindestens einer Abtriebsscheibe (8) und mindestens einem Antriebsriemen (2), vorzugsweise einem Zahnriemen (2), wobei der Antriebsriemen (2) die Antriebsscheibe (6) und Abtriebsscheibe (8) umlaufend über jeweils einen Teilumfang umschlingt, wobei der Antriebsriemen (2) mindestens eine erste Markierung (16) aufweist, und mindestens einem dem Antriebsriemen (2) zugeordneten ersten Sensorelement (10), wobei während des Riemenumlaufs die Passage der ersten Markierung (16) durch das erste Sensorelement (10) detektiert wird,

umfassend die folgenden Verfahrensschritte:

a) Erfassen eines ersten Signals (SR1) durch das erste Sensorelement (10), wobei das erste Signal (SR1) von der Detektion der ersten Markierung (16) abhängig ist,
b) Übertragung des ersten Signals (SR1) an eine Recheneinheit (14),
c) Ausgabe eines Warn- oder Alarmsignals und/oder Inkrementelles Zählen eines Ereignisses bei Unterschreiten eines festgelegten Toleranzwertes durch die Recheneinheit (14),

wobei die erste Markierung (16) einen sich in Längsrichtung des Antriebsriemens (2) erstreckenden ersten Markierungsabschnitt (17) und einen sich quer zur Längsrichtung erstreckenden zweiten Markierungsabschnitt (18) aufweist, wobei der erste Markierungsabschnitt (17) und der zweite Markierungsabschnitt (18) sich einander kreuzen, wobei die Recheneinheit (14) gemäß einem weiteren Verfahrensschritt g) zu einem Zeitpunkt der maximalen Intensität des ersten Signals (SR1) die Lage der ersten Markierung (16) zu dem ersten Sensorelement (10) bestimmt und hieraus einen Einlaufwinkel ($\alpha$) eines Riementrums, vorzugsweise des Leertrums, bestimmt.

2. Verfahren nach Anspruch 1, wobei die Recheneinheit (14) aus einer Veränderung des Abstands zwischen dem ersten Sensorelement (10) und dem Antriebsriemen (2) eine Veränderung der Vorspannkraft eines Riementrums, vorzugsweise des Leertrums bestimmt.

3. Verfahren nach einem der vorhergehenden Ansprüche, **gekennzeichnet durch** die weiteren Verfahrensschritte

d) Erfassen eines dem Riemen zugeordneten zweiten Signals (SR2) durch ein zweites Sensorelement (12), wobei während des Riemenumlaufs die Passage der ersten Markierung (16) durch das zweite Sensorelement (12) detektiert wird, wobei das zweite Signal (SR2) von der Detektion der ersten Markierung (16) abhängig ist,
e) Übertragen des zweiten Signals (SR2) an die Recheneinheit (14),
f) Ausgabe eines Warn- oder Alarmsignals und/oder Inkrementelles Zählen eines Ereignisses bei Unterschreiten eines festgelegten Toleranzwertes durch die Recheneinheit (14),
wobei die Recheneinheit (14) gemäß einem weiteren Verfahrensschritt g) zu einem Zeitpunkt der maximalen Intensität des zweiten Signals (SR2) die Lage der ersten Markierung (16) zu dem zweiten Sensorelement (12) bestimmt und hieraus einen Einlaufwinkel ($\alpha$) eines Riementrums, vorzugsweise des Leertrums, bestimmt.

4. Verfahren nach Anspruch 3, **gekennzeichnet durch** die weiteren Verfahrensschritte:

h) Ermittlung der Umfangsgeschwindigkeit der Antriebsscheibe (6) aus einem Drehzahlsignal (n) des Antriebsmotors (4) oder der Antriebsscheibe (6) und einem Durchmesser der Antriebsscheibe (6) durch die Recheneinheit (14),
i) Bestimmung eines Zeitintervalls zwischen einem ersten Zeitpunkt (T1) der Erfassung des ersten Sensorsignals (SR1) und einem zweiten Zeitpunkt (T2) der Erfassung des zweiten Sensorsignals (SR2) durch die Recheneinheit (14),
j) Ermittlung der Geschwindigkeit des Antriebsriemens (2) aus dem zurückgelegten Weg des Antriebsriemens (2) über eine in der Recheneinheit (14) hinterlegte Abschnittslänge des Antriebsriemens (2) zwischen dem Sensorelement (10) und dem zweiten Sensorelement (12) während des Zeitintervalls (T2-T1) durch die Recheneinheit (14)
k) Vergleich der Geschwindigkeit des Antriebsriemens (2) mit der Umfangsgeschwindigkeit der Antriebsscheibe (6),
l) Ausgabe eines Warn- oder Alarmsignals bei Abweichung von einem Toleranzbereich zwischen der Umfangsgeschwindigkeit der Antriebsscheibe (6) und der Geschwindigkeit des Antriebsriemens (2) durch die Recheneinheit (14).

5. Verwendung des Verfahrens nach einem der Ansprüche 1 bis 4 zur Überwachung eines Riementriebs (1) mit wenigstens einem Antriebsriemen (2).

6. Vorrichtung zur Überwachung eines Riementriebs (1) mit mindestens einer durch einen elektrischen Antriebsmotor (4) angetriebenen Antriebsscheibe (6) und einer Abtriebsscheibe (8) und mindestens einem Antriebsriemen (2), vorzugsweise einem Zahnriemen (2), wobei der Antriebsriemen (2) die Antriebsscheibe (6) und die Abtriebsscheibe (8) umlaufend über jeweils einen Teilumfang umschlingt,

und mindestens einem dem Antriebsriemen (2) zugeordneten ersten Sensorelement (10), wobei das erste Sensorelement (10) zur Erfassung eines ersten Signals (SR1) ausgebildet ist, wobei die Recheneinheit (14) ausgebildet ist, nach Unterschreiten eines festgelegten Toleranzwertes ein Warn- oder Alarmsignal auszugeben und/oder ein Ereignis inkrementell zu zählen, wobei der Antriebsriemen (2) mindestens eine erste Markierung (16) aufweist, wobei während des Riemenumlaufs die Passage der ersten Markierung (16) durch das erste Sensorelement (10) detektierbar ist, wobei das erste Signal (SR1) von der Detektion der ersten Markierung (16) abhängig ist, wobei die erste Markierung (16) einen sich in Längsrichtung des Antriebsriemens (2) erstreckenden ersten Markierungsabschnitt (17) und einen sich quer zur Längsrichtung erstreckenden zweiten Markierungsabschnitt (18) aufweist, wobei der erste Markierungsabschnitt (17) und der zweite Markierungsabschnitt (18) sich einander kreuzen, wobei das erste Sensorelement (10) eine Mehrzahl von in unterschiedlichen Raumrichtungen orientierten Sensoren aufweist, wobei die Recheneinheit (14) ausgebildet ist, zu einem Zeitpunkt der maximalen Intensität des ersten Signals (SR1) die Lage der ersten Markierung (16) zu dem ersten Sensorelement (10) zu bestimmen und hieraus einen Einlaufwinkel (α) eines Riementrums, vorzugsweise des Leertrums zu bestimmen.

7. Vorrichtung zur Überwachung eines Riementriebs (1) nach Anspruch 6, **dadurch gekennzeichnet, dass** die Recheneinheit (14) ausgebildet ist, aus einer Veränderung des Abstands zwischen dem ersten Sensorelement (10) und dem Antriebsriemen (2) eine Veränderung der Vorspannkraft eines Riementrums, vorzugsweise des Leertrums, zu bestimmen.

8. Vorrichtung zur Überwachung eines Riementriebs (1) nach einem der Ansprüche 6 bis 7, **dadurch gekennzeichnet, dass**

der Riementrieb (1) ein dem Antriebsriemen (2) zugeordnetes zweites Sensorelement (12) aufweist, wobei während des Riemenumlaufs die Passage der ersten Markierung (16) durch das zweite Sensorelement (12) detektierbar ist, wobei das zweite Sensorelement (12) zur Erfassung eines zweiten Signals (SR2) ausgebildet ist, wobei das zweite Signal (SR2) von der Detektion der ersten Markierung (16) abhängig ist, wobei das zweite Signal (SR2) an die Recheneinheit (14) zur Ermittlung eines Abstands zwischen dem zweiten Sensorelement (12) und dem Antriebsriemen (2) weiterleitbar ist, wobei die Recheneinheit (14) ausgebildet ist, nach Unterschreiten eines festgelegten Toleranzwertes ein Warn- oder Alarmsignal auszugeben und/oder ein Ereignis inkrementell zu zählen, wobei das zweite Sensorelement (12) eine Mehrzahl von in unterschiedlichen Raumrichtungen orientierten Sensoren aufweist, wobei die Recheneinheit (14) ausgebildet ist, zu einem Zeitpunkt der maximalen Intensität des zweiten Signals (SR2) die Lage der ersten Markierung (16) zu dem zweiten Sensorelement (12) zu bestimmen und hieraus einen Einlaufwinkel (α) eines Riementrums, vorzugsweise des Leertrums zu bestimmen.

9. Vorrichtung zur Überwachung eines Riementriebs (1) nach einem der Ansprüche 8, **dadurch gekennzeichnet, dass**

die Recheneinheit (14) ausgebildet ist, aus einem Drehzahlsignal (n) des Antriebsmotors (4) oder der Antriebsscheibe (6) und einem Durchmesser der Antriebsscheibe (6) die Umfangsgeschwindigkeit der Antriebsscheibe (6) zu ermitteln, wobei die Recheneinheit (14) ausgebildet ist, ein Zeitintervall zwischen einem ersten Zeitpunkt (T1) der Erfassung des ersten Sensorsignals (SR1) und einem zweiten Zeitpunkt (T2) der Erfassung des zweiten Sensorsignals (SR2) zu bestimmen, wobei die Recheneinheit (14) ausgebildet ist, die Geschwindigkeit des Antriebsriemens (2) aus dem zurückgelegten Weg des Antriebsriemens (2) über die Abschnittslänge zwischen dem Sensorelement (10) und dem zweiten Sensorelement (12) während des Zeitintervalls (T2-T1) zu ermitteln und mit der Umfangsgeschwindigkeit der Antriebsscheibe (6) zu vergleichen, wobei die Recheneinheit (14) ausgebildet ist, bei Abweichung von einem Toleranzbereich zwischen der Umfangsgeschwindigkeit der Antriebsscheibe (6) und der Geschwindigkeit des Antriebsriemens (2) ein Warn- oder Alarmsignal auszugeben.

10. Riementrieb (1) mit einer Vorrichtung zur Überwachung eines Riementriebs (1) nach einem der Ansprüche 6 bis 9.

## Claims

1. A method for monitoring a belt drive (1) having at least one drive pulley (6) driven by a drive motor (4) and at least one driven pulley (8) and at least one drive belt (2), preferably a toothed belt (2), wherein the drive belt (2) wraps around the drive pulley (6) and the driven pulley (8) circumferentially over a respective partial circumference, wherein the drive belt (2) has at least one first marking (16), and at least one first sensor element (10) associated with the drive belt (2), wherein, during belt circulation, the passage of the first marking (16) is detected by the first sensor element (10), comprising the following method steps: a) acquiring a first signal (SR1) by the first sensor element (10), wherein the first signal (SR1) is dependent on the detection of the first marking (16), b) transmitting the first signal (SR1) to a computing unit (14), c) outputting a warning or alarm signal and/or incrementally counting an event when a specified tolerance value is undershot by the computing unit (14), wherein the first marking (16) has a first marking section (17) extending in the longitudinal direction of the drive belt (2) and a second marking section (18) extending transversely to the longitudinal direction, wherein the first marking section (17) and the second marking section (18) cross one another, wherein the computing unit (14), according to a further method step g) determines, at a time of maximum intensity of the first signal (SR1), the position of the first marking (16) relative to the first sensor element (10) and determines therefrom an entry angle ($\alpha$) of a belt span, preferably of the slack span.

2. The method according to claim 1, wherein the computing unit (14) determines, from a change in the distance between the first sensor element (10) and the drive belt (2), a change in the pretensioning force of a belt span, preferably of the slack span.

3. The method according to one of the preceding claims, **characterized by** the further method steps of
d) acquiring a second signal (SR2) associated with the belt by a second sensor element (12), wherein, during belt circulation, the passage of the first marking (16) is detected by the second sensor element (12), wherein the second signal (SR2) is dependent on the detection of the first marking (16), e) transmitting the second signal (SR2) to the computing unit (14), f) outputting a warning or alarm signal and/or incrementally counting an event when a specified tolerance value is undershot by the computing unit (14), wherein the computing unit (14), according to a further method step g) determines, at a time of maximum intensity of the second signal (SR2), the position of the first marking (16) relative to the second sensor element (12) and determines therefrom an entry angle ($\alpha$) of a belt span, preferably of the slack span.

4. The method according to claim 3, **characterized by** the further method steps of: h) determining the circumferential speed of the drive pulley (6) from a rotational-speed signal (n) of the drive motor (4) or of the drive pulley (6) and a diameter of the drive pulley (6) by the computing unit (14), i) determining a time interval between a first time (T1) of acquisition of the first sensor signal (SR1) and a second time (T2) of acquisition of the second sensor signal (SR2) by the computing unit (14), j) determining the speed of the drive belt (2) from the distance travelled by the drive belt (2) over a section length of the drive belt (2), stored in the computing unit (14), between the sensor element (10) and the second sensor element (12) during the time interval (T2-T1) by the computing unit (14), k) comparing the speed of the drive belt (2) with the circumferential speed of the drive pulley (6), l) outputting a warning or alarm signal in the event of a deviation from a tolerance range between the circumferential speed of the drive pulley (6) and the speed of the drive belt (2) by the computing unit (14).

5. Use of the method according to one of claims 1 to 4 for monitoring a belt drive (1) having at least one drive belt (2).

6. A device for monitoring a belt drive (1) having at least one drive pulley (6) driven by an electric drive motor (4) and a driven pulley (8) and at least one drive belt (2), preferably a toothed belt (2), wherein the drive belt (2) wraps around the drive pulley (6) and the driven pulley (8) circumferentially over a respective partial circumference,

and at least one first sensor element (10) associated with the drive belt (2), wherein the first sensor element (10) is designed to acquire a first signal (SR1), wherein the computing unit (14) is designed, after a specified tolerance value is undershot, to output a warning or alarm signal and/or to incrementally count an event,

wherein the drive belt (2) has at least one first marking (16), wherein, during belt circulation, the passage of the first marking (16) is detectable by the first sensor element (10), wherein the first signal (SR1) is dependent on the detection of the first marking (16), wherein the first marking (16) has a first marking section (17) extending in the longitudinal direction of the drive belt (2) and a second marking section (18) extending transversely to the longitudinal direction, wherein the first marking section (17) and the second marking section (18) cross one another, wherein the first sensor element (10) has a plurality of sensors oriented in different spatial directions, wherein the computing unit (14) is designed to determine, at a time of maximum intensity of the first signal (SR1), the position of the first marking (16) relative to the first sensor element (10) and to determine therefrom an entry angle ($\alpha$) of a belt span, preferably of the slack span.

7. The device for monitoring a belt drive (1) according to claim 6, **characterized in that** the computing unit (14) is designed to determine, from a change in the distance between the first sensor element (10) and the drive belt (2), a change in the pretensioning force of a belt span, preferably of the slack span.

8. The device for monitoring a belt drive (1) according to one of claims 6 to 7, **characterized in that** the belt drive (1) has a second sensor element (12) associated with the drive belt (2), wherein, during belt circulation, the passage of the first marking (16) is detectable by the second sensor element (12), wherein the second sensor element (12) is designed to acquire a second signal (SR2), wherein the second signal (SR2) is dependent on the detection of the first marking (16), wherein the second signal (SR2) can be forwarded to the computing unit (14) for determining a distance between the second sensor element (12) and the drive belt (2), wherein the computing unit (14) is designed, after a specified tolerance value is undershot, to output a warning or alarm signal and/or to incrementally count an event, wherein the second sensor element (12) has a plurality of sensors oriented in different spatial directions, wherein the computing unit (14) is designed to determine, at a time of maximum intensity of the second signal (SR2), the position of the first marking (16) relative to the second sensor element (12) and to determine therefrom an entry angle ($\alpha$) of a belt span, preferably of the slack span.

9. The device for monitoring a belt drive (1) according to claim 8, **characterized in that** the computing unit (14) is designed to determine, from a rotational-speed signal (n) of the drive motor (4) or of the drive pulley (6) and a diameter of the drive pulley (6), the circumferential speed of the drive pulley (6), wherein the computing unit (14) is designed to determine a time interval between a first time (T1) of acquisition of the first sensor signal (SR1) and a second time (T2) of acquisition of the second sensor signal (SR2), wherein the computing unit (14) is designed to determine the speed of the drive belt (2) from the distance travelled by the drive belt (2) over the section length between the sensor element (10) and the second sensor element (12) during the time interval (T2-T1) and to compare it with the circumferential speed of the drive pulley (6), wherein the computing unit (14) is designed, in the event of a deviation from a tolerance range between the circumferential speed of the drive pulley (6) and the speed of the drive belt (2), to output a warning or alarm signal.

10. A belt drive (1) having a device for monitoring a belt drive (1) according to one of claims 6 to 9.

**Revendications**

1. Procédé de surveillance d'une transmission par courroie (1) comprenant au moins une poulie motrice (6) entraînée par un moteur d'entraînement (4), au moins une poulie entraînée (8) et au moins une courroie d'entraînement (2), de préférence une courroie dentée (2), dans lequel la courroie d'entraînement (2) entoure, en circulation, la poulie motrice (6) et la poulie entraînée (8) sur une partie respective de leur circonférence, dans lequel la courroie d'entraînement (2) présente au moins un premier repère (16), et au moins un premier élément capteur (10) associé à la courroie d'entraînement (2), dans lequel, pendant la circulation de la courroie, le passage du premier repère (16) est détecté par le premier élément capteur (10), comprenant les étapes de procédé suivantes:

  a) acquisition d'un premier signal (SR1) par le premier élément capteur (10), dans lequel le premier signal (SR1) dépend de la détection du premier repère (16),
  b) transmission du premier signal (SR1) à une unité de calcul (14),
  c) émission d'un signal d'avertissement ou d'alarme et/ou comptage incrémentiel d'un événement lorsqu'une valeur de tolérance définie n'est pas atteinte par l'unité de calcul (14), dans lequel le premier repère (16) présente une première section de repère (17) s'étendant dans la direction longitudinale de la courroie d'entraînement (2) et une deuxième section de repère (18) s'étendant transversalement à la direction longitudinale, dans lequel la première section de repère (17) et la deuxième section de repère (18) se croisent, dans lequel l'unité de calcul (14), selon une autre étape de procédé g) détermine, à un instant d'intensité maximale du premier signal (SR1), la position du premier repère (16) par rapport au premier élément capteur (10) et détermine à partir de celle-ci un angle d'entrée (α) d'un brin de courroie, de préférence du brin mou.

2. Procédé selon la revendication 1, dans lequel l'unité de calcul (14) détermine, à partir d'une variation de la distance entre le premier élément capteur (10) et la courroie d'entraînement (2), une variation de la force de précontrainte d'un brin de courroie, de préférence du brin mou.

3. Procédé selon l'une des revendications précédentes, **caractérisé par** les autres étapes de procédé suivantes: d) acquisition d'un deuxième signal (SR2) associé à la courroie par un deuxième élément capteur (12), dans lequel, pendant la circulation de la courroie, le passage du premier repère (16) est détecté par le deuxième élément capteur (12), dans lequel le deuxième signal (SR2) dépend de la détection du premier repère (16), e) transmission du deuxième signal (SR2) à l'unité de calcul (14), f) émission d'un signal d'avertissement ou d'alarme et/ou comptage incrémentiel d'un événement lorsqu'une valeur de tolérance définie n'est pas atteinte par l'unité de calcul (14), dans lequel l'unité de calcul (14), selon une autre étape de procédé g) détermine, à un instant d'intensité maximale du deuxième signal (SR2), la position du premier repère (16) par rapport au deuxième élément capteur (12) et détermine à partir de celle-ci un angle d'entrée (α) d'un brin de courroie, de préférence du brin mou.

4. Procédé selon la revendication 3, **caractérisé par** les autres étapes de procédé suivantes :

   h) détermination de la vitesse périphérique de la poulie motrice (6) à partir d'un signal de vitesse de rotation (n) du moteur d'entraînement (4) ou de la poulie motrice (6) et d'un diamètre de la poulie motrice (6) par l'unité de calcul (14),
   i) détermination d'un intervalle de temps entre un premier instant (T1) d'acquisition du premier signal de capteur (SR1) et un deuxième instant (T2) d'acquisition du deuxième signal de capteur (SR2) par l'unité de calcul (14),
   j) détermination de la vitesse de la courroie d'entraînement (2) à partir du trajet parcouru par la courroie d'entraînement (2) sur une longueur de section de la courroie d'entraînement (2), enregistrée dans l'unité de calcul (14), entre l'élément capteur (10) et le deuxième élément capteur (12) pendant l'intervalle de temps (T2-T1) par l'unité de calcul (14),
   k) comparaison de la vitesse de la courroie d'entraînement (2) avec la vitesse périphérique de la poulie motrice (6), l) émission d'un signal d'avertissement ou d'alarme en cas d'écart par rapport à une plage de tolérance entre la vitesse périphérique de la poulie motrice (6) et la vitesse de la courroie d'entraînement (2) par l'unité de calcul (14).

5. Utilisation du procédé selon l'une des revendications 1 à 4 pour surveiller une transmission par courroie (1) comprenant au moins une courroie d'entraînement (2).

6. Dispositif de surveillance d'une transmission par courroie (1) comprenant au moins une poulie motrice (6) entraînée par un moteur d'entraînement électrique (4), une poulie entraînée (8) et au moins une courroie d'entraînement (2), de préférence une courroie dentée (2), dans lequel la courroie d'entraînement (2) entoure, en circulation, la poulie motrice (6) et la poulie entraînée (8) sur une partie respective de leur circonférence, et au moins un premier élément capteur (10) associé à la courroie d'entraînement (2), dans lequel le premier élément capteur (10) est conçu pour acquérir un premier signal (SR1), dans lequel l'unité de calcul (14) est conçue, après qu'une valeur de tolérance définie n'a pas été atteinte, pour émettre un signal d'avertissement ou d'alarme et/ou pour compter incrémentiellement un événement,
   dans lequel la courroie d'entraînement (2) présente au moins un premier repère (16), dans lequel, pendant la circulation de la courroie, le passage du premier repère (16) peut être détecté par le premier élément capteur (10), dans lequel le premier signal (SR1) dépend de la détection du premier repère (16), dans lequel le premier repère (16) présente une première section de repère (17) s'étendant dans la direction longitudinale de la courroie d'entraînement (2) et une deuxième section de repère (18) s'étendant transversalement à la direction longitudinale, dans lequel la première section de repère (17) et la deuxième section de repère (18) se croisent, dans lequel le premier élément capteur (10) présente une pluralité de capteurs orientés dans différentes directions spatiales, dans lequel l'unité de calcul (14) est conçue pour déterminer, à un instant d'intensité maximale du premier signal (SR1), la position du premier repère (16) par rapport au premier élément capteur (10) et pour déterminer à partir de celle-ci un angle d'entrée (α) d'un brin de courroie, de préférence du brin mou.

7. Dispositif de surveillance d'une transmission par courroie (1) selon la revendication 6, **caractérisé en ce que** l'unité de calcul (14) est conçue pour déterminer, à partir d'une variation de la distance entre le premier élément capteur (10) et la courroie d'entraînement (2), une variation de la force de précontrainte d'un brin de courroie, de préférence du brin mou.

8. Dispositif de surveillance d'une transmission par courroie (1) selon l'une des revendications 6 à 7, **caractérisé en ce que** la transmission par courroie (1) présente un deuxième élément capteur (12) associé à la courroie d'entraînement (2), dans lequel, pendant la circulation de la courroie, le passage du premier repère (16) peut être détecté par le deuxième élément capteur (12), dans lequel le deuxième élément capteur (12) est conçu pour acquérir un deuxième signal (SR2), dans lequel le deuxième signal (SR2) dépend de la détection du premier repère (16), dans lequel le deuxième signal (SR2) peut être transmis à l'unité de calcul (14) pour déterminer une distance entre le deuxième élément capteur (12) et la courroie d'entraînement (2), dans lequel l'unité de calcul (14) est conçue, après qu'une valeur de tolérance définie n'a pas été atteinte, pour émettre un signal d'avertissement ou d'alarme et/ou pour compter incrémentiellement un événement, dans lequel le deuxième élément capteur (12) présente une pluralité de capteurs orientés dans différentes directions spatiales, dans lequel l'unité de calcul (14) est conçue pour déterminer, à un instant d'intensité maximale du deuxième signal (SR2), la position du premier repère (16) par rapport au deuxième élément capteur (12) et pour déterminer à partir de celle-ci un angle d'entrée ($\alpha$) d'un brin de courroie, de préférence du brin mou.

9. Dispositif de surveillance d'une transmission par courroie (1) selon la revendication 8, **caractérisé en ce que** l'unité de calcul (14) est conçue pour déterminer, à partir d'un signal de vitesse de rotation (n) du moteur d'entraînement (4) ou de la poulie motrice (6) et d'un diamètre de la poulie motrice (6), la vitesse périphérique de la poulie motrice (6), dans lequel l'unité de calcul (14) est conçue pour déterminer un intervalle de temps entre un premier instant (T1) d'acquisition du premier signal de capteur (SR1) et un deuxième instant (T2) d'acquisition du deuxième signal de capteur (SR2), dans lequel l'unité de calcul (14) est conçue pour déterminer la vitesse de la courroie d'entraînement (2) à partir du trajet parcouru par la courroie d'entraînement (2) sur la longueur de section entre l'élément capteur (10) et le deuxième élément capteur (12) pendant l'intervalle de temps (T2-T1) et pour la comparer à la vitesse périphérique de la poulie motrice (6), dans lequel l'unité de calcul (14) est conçue, en cas d'écart par rapport à une plage de tolérance entre la vitesse périphérique de la poulie motrice (6) et la vitesse de la courroie d'entraînement (2), pour émettre un signal d'avertissement ou d'alarme.

10. Transmission par courroie (1) comprenant un dispositif de surveillance d'une transmission par courroie (1) selon l'une des revendications 6 à 9.

**Fig. 1**

**Fig. 2a**

**Fig. 2b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0382115 A2
- US 9228909 B1
- DE 202016008121 U1
- WO 2016177883 A1
- DE 102019206169 A1
- US 20210010899 A1